Europäisches Patentamt

European Patent Office  (11) Publication number: **0 046 373**

Office européen des brevets  **A1**

(19)

(12) **EUROPEAN PATENT APPLICATION**

(21) Application number: 81303686.0

(22) Date of filing: 13.08.81

(51) Int. Cl.³: **B 60 K 17/06,** F 16 H 3/08

(30) Priority: 14.08.80 GB 8026577

(43) Date of publication of application: 24.02.82
Bulletin 82/8

(84) Designated Contracting States: AT BE DE FR GB IT NL
SE

(71) Applicant: AUTOMOTIVE PRODUCTS LIMITED,
Tachbrook Road, Leamington Spa Warwickshire
CV31 3ER (GB)

(72) Inventor: Parsons, David, 73 John O'Gaunt Road,
Kenilworth Warwickshire (GB)
Inventor: Bainbridge, Wilfred Nicholas, "Staddle
Stones", Overthorpe Banbury (GB)
Inventor: Jarvis, Roger Porter, 87 Lime Avenue,
Leamington Spa Warwickshire (GB)
Inventor: Stanbridge, Peter John, 18 Staunton Road,
Leamington Spa Warwickshire (GB)

(54) **Rotary transmission.**

(57)  A rotary transmission has a set of gear trains each providing one of a series of speed ratios and includes an input shaft (11) and two countershafts (14, 15) with gear trains, having a common drive gear wheel (22), engagable therebetween; each countershaft (14, 15) has a single respective output gear wheel (16, 17) for meshing engagement with a common gear wheel of an output shaft. An alternative transmission having two independently operable clutches (12, 13) such that sequential gear trains in the series are driven through one and the other of the clutches (12, 13) is also disclosed.

"Rotary Transmission"

This invention relates to motor vehicle rotary transmission mechanisms.

Current motor vehicle design trends indicate that an increasing proportion of vehicle production will be front wheel drive. Front wheel drive vehicles usually have the engine, clutch, gearbox and final drive mechanisms assembled as a single power unit; this can reduce material and manufacturing costs.

Many of such front wheel drive vehicles have a transverse engine installation, this can reduce overall vehicle length and so reduce manufacturing costs still further.

Small transverse engined vehicles have little space between the front wheel suspension mechanisms to site the power unit. It has been proposed to place the gearbox beneath the engine but this leads to low ground clearance and/or a high bonnet line with consequent reduced driver visibility. Although small transverse engined vehicles having gearboxes placed alongside the engine are known it is uncommon to find such vehicles fitted with a fully automatic transmission.

Current motor vehicle design trends further indicate an increased number of speed ratios being provided in the transmission for reasons of fuel economy.

The present invention seeks to provide a constant mesh rotary transmission which is suitable for small transverse engined vehicles, which provides a greater number of speed ratios than is usual for such transmissions and which is suitable for adaption to fully automatic control.

According to the invention there is provided a rotary transmission having a set of gear trains each providing one of a series of speed ratios and comprising an input shaft, at least one gear train engagable between said input shaft and a countershaft, at least one gear train engagable between said input shaft and another countershaft, said gear trains having a common drive gear wheel characterised thereby that each countershaft has a single output gear wheel for/ meshing engagement with a common gear wheel of an output shaft.

Two independent clutches may provide alternative drive paths between the input drive shaft and the output drive shaft, sequential gear trains in the series being arranged respectively to be driven through one and the other of the two clutches.

Preferably the intermediate drive shafts comprise countershafts parallel to the input drive shaft.

Reverse speed ratio may be provided by a gear train between said input drive shaft and one of said countershafts, the other of said countershafts supporting a single idler gear in the train.

In one embodiment the countershafts are connected to the output drive shaft through gear trains respectively of different ratio.

The common drive gear may be engagable with each of the countershafts respectively through gear trains of the same ratio.

Other features of the invention are included in the following description of two preferred embodiments shown, by way of example only, in the accompanying schematic illustrations of a six speed rotary transmission in which:-

Fig. 1 is a six speed manual transmission;

Fig. 2 is a six speed transmission suitable for fully automatic control;

Fig. 3 is a reversing gear arrangement for the transmissions of Figs. 1 and 2; and

Fig. 4 is a transverse section through the reversing gear arrangement of Fig. 3.

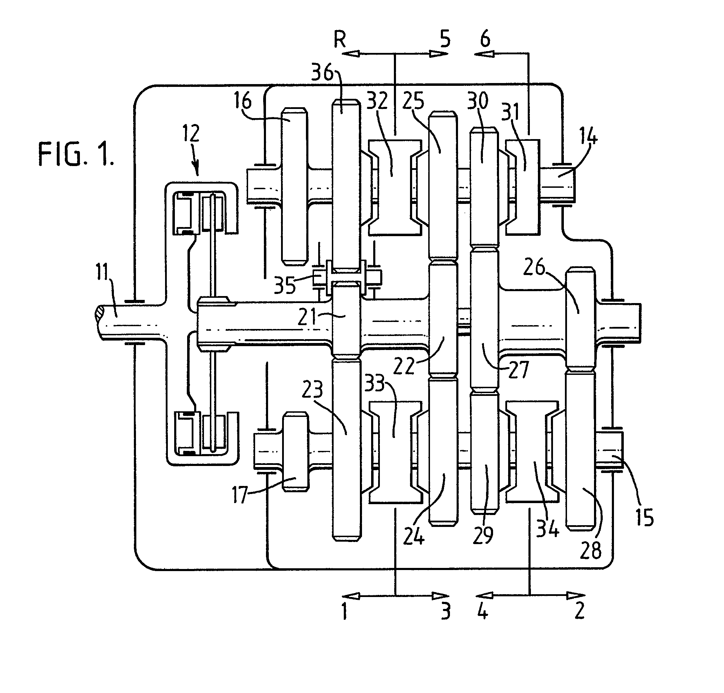

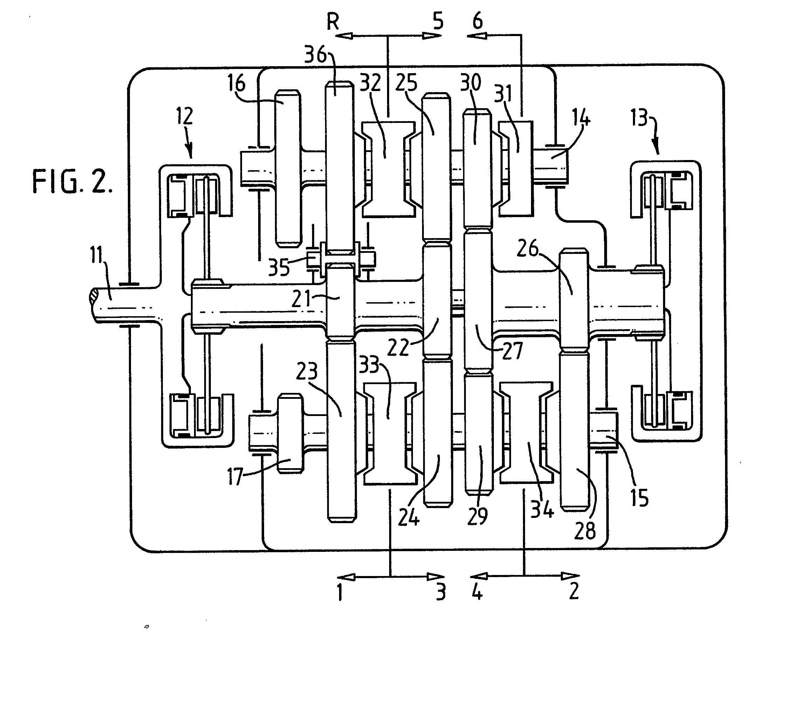

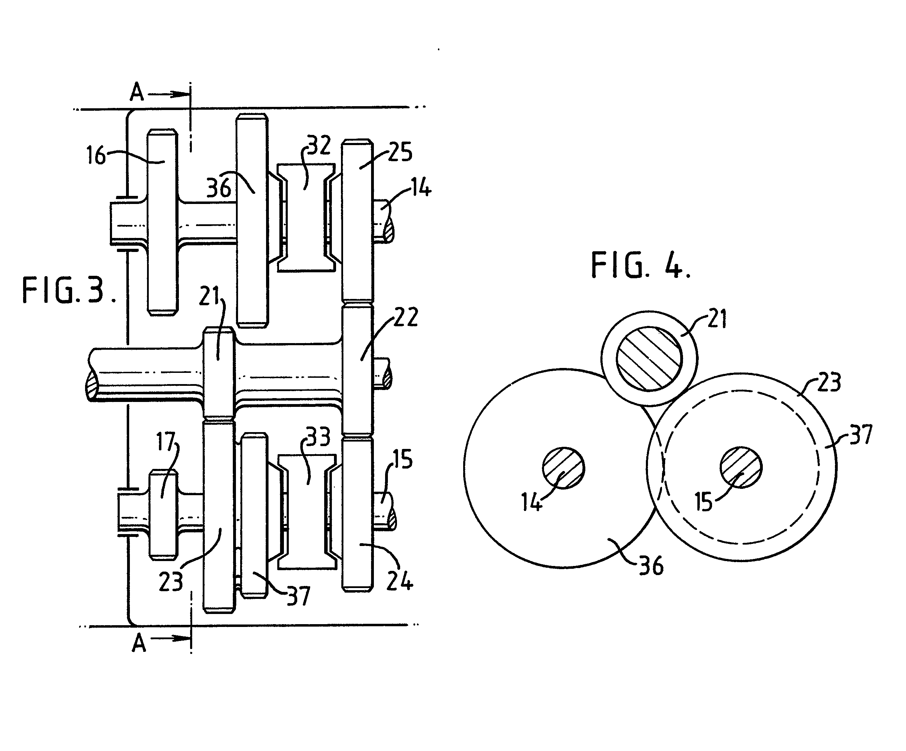

For ease of understanding the transmission is depicted in Figs. 1 and 2 as having three main shafts all lying in the same plane. As will become apparent from the following text, and as shown in Fig. 4, one of the shafts may advantageously be out of the plane of the remaining two.

The torque input to the transmission may be direct from an engine or, in the case of Fig. 2, may be through a fluid coupling; for example a torque converter. The coupling may include a lock-up clutch to connect the coupling input to its output.

With reference to Fig. 1 there is shown an input shaft 11 from an engine and connectable through a clutch 12 and trains of gear wheels with output shafts 14 and 15 having respective output gear wheels 16 and 17. The wheels 16 and 17 are in mesh with a final drive gear wheel (not shown) for transmission of driving torque to the vehicle wheels.

Six forward speed ratios are provided in this embodiment. First, second, third and fourth speed driving gear wheels 21, 26, 22, 27 are mounted for rotation with the clutch output shaft. The meshing driven gear wheels, 23, 28, 24, 29 are mounted for rotation on the output shaft 15 and are connectable thereto by synchronising clutch assemblies 33, 34, shiftable in response to movement of the transmission gear lever. Construction and operation of such assemblies is well known from conventional manual gearbox art.

Third and fourth speed driving gear wheels 22, 27 mesh also with gear wheels 25, 30 mounted for rotation on output shaft 14. These gear wheel pairs constitute fifth and sixth speed ratios and are connectable to the output shaft 14 by synchronising assemblies 31 and 32.

Reverse gear ratio is provided from first gear drive gear wheel 21 through idler wheel 35 and gear wheel 36 mounted for rotation on output shaft 14. With alternative means for selecting reverse ratio the number of synchronising assemblies in the transmission can be reduced from four to three, the single sided assembly 31 may be eliminated.

Thus a transmission is provided which has six forward speeds but which has no greater length than a conventional four speed transmission.

A further advantage of the invention is that the diameters of the output gear wheels 16, 17 may be chosen to minimise the number of different sized gear wheels in the transmission. In the embodiment of Fig. 1 the gear wheels 29 and 30 and the gear wheels 24 and 25 are respectively of the same diameter.

With reference to Fig. 2 there is shown the transmission of Fig. 1 modified for fully automatic operation ensuring continuous driving torque to the vehicle wheels during a ratio change. Similar components in the transmission carry the same reference numerals.

The first, second, third and fourth driving gear cluster 21, 26, 22, 27 is split so that first and third gear wheels 21, 22 are driven through the clutch 12, and second and fourth gear wheels 26 and 27 are driven through a second friction clutch 13. Drive to the clutch 13 is conveniently through the driving gear cluster from the input shaft 11. The transmission is otherwise unchanged.

It is intended that speed ratio selection and operation of the clutches 12, 13 should be effected by an automatic control system. One suitable control system is described for example in our co-pending patent application No. 81.04386.

Operation of the transmission is as follows:-

The vehicle engine is running, both clutches 12, 13 are disengaged and the transmission has no ratio selected.

To move off from rest, first ratio is selected in response to the automatic control system by shifting of synchronising assembly 33 to couple gear wheel 23 to output shaft 15. As the vehicle engine is accelerated, the clutch 12 is engaged by the automatic control and the driving torque is transmitted through the gear wheels 21, 23 and 17 to the vehicle driving wheels. Drive take up may be additionally through a fluid coupling as previously mentioned.

The automatic control pre-selects second speed ratio by shifting synchronising assembly 34 to couple gear wheel 28 to the output shaft 15. Consequently second gear drive train of gear wheels 28, 26 and the driven member of clutch 13 are driven idly by the output shaft 15.

In order to reduce the speed differential across the synchronising assembly 34 prior to pre-selection of second speed ratio, clutch 13 may be momentarily engaged to raise the speed of gear wheel 26 to engine speed.

The automatic control initiates a ratio change from first speed to second speed in response to the values of the usual control parameters such as throttle opening and road speed.

Clutch 12 is disengaged as clutch 13 is engaged and driving torque is progressively transferred from the first gear drive train to

0046373

the second gear drive train, so providing a 'power on' ratio change.

First gear drive train is now driven idly by output shaft 15 and synchronising assembly 33 may be shifted to disengage first speed ratio. Dependent on the values of the control parameters the synchronising assembly 33 will be shifted to pre-select third speed ratio in preparation for an up-change or reselect first speed ratio in preparation for a down change.

Thus the control system signals pre-selection of the required next sequential speed ratio, the ratio change being made at the appropriate moment by changing drive from one of the clutches 12, 13 to the other.

Thus is provided a transmission suitable for fully automatic control with continuous torque delivery to the driving wheels during ratio changes and which is adapted from the manual transmission of the invention.

The number of speed ratios in the transmission may be altered provided that with the transmission suitable for automatic control, adjacent ratios are not driven through the same friction clutch.

Reverse speed may be obtained by an additional gear train in any known manner. Fig. 1 shows the use of an additional lay gear idler wheel 35 connecting driving pinion 21 to reverse gear wheel 36.

An alternative arrangement, particularly suited to this transmission is shown in Fig. 3. A reversing gear 37 is fast with first gear driven gear 23 and meshes directly with reverse gear wheel 36. The transmission output shafts are arranged as shown in Fig. 4, the additional gear wheel 37 reversing rotation of the drive from input to output. The diameters of the meshing wheels 36 and 37 may be chosen to suit the desired reverse gear ratio. This arrangement confers a further advantage in that the reverse gear drive train may have straight cut gear wheels, as is usual, whilst the first gear drive train may have helical toothform and the driven straight spur gear wheel 36 be cut on the selector sleeve of syncronising clutch assembly 32 and displaced axially into mesh with gear wheel 37.

Claims

1.      A rotary transmission having a set of gear trains each providing one of a series of speed ratios and comprising an input shaft (11), at least one gear train (22, 25) engagable between said input shaft (11) and a countershaft (14), at least one gear train (22, 24) engagable between said input shaft and another countershaft (15), said gear trains having a common drive gear wheel (22) characterised thereby that each countershaft (14,15) has a single output gear wheel (16,17) for meshing engagement with a common gear wheel of an output shaft.

2.      A rotary transmission according to Claim 1, characterised thereby that two independently operable clutches (12,13) provide alternative drive paths between the input shaft (11) and the output shaft, sequential gear trains in the series being arranged respectively to be driven through one and the other of the two clutches (12,13).

3. A rotary transmission according to Claim 2, characterised thereby that said two clutches (12,13) are located at opposite sides of the set of gear trains, the countershaft output gears (16,17) being located at the same side as said input shaft (11).

4. A rotary transmission according to Claim 3, characterised thereby that a reverse speed ratio is provided by a gear train between said input shaft (11) and one of said countershafts (14), the other of said countershafts (15) supporting an idler gear (23,37) in the train.

5. A rotary transmission according to Claim 3, characterised thereby that the countershafts (14,15) are for connection to said output shaft through gear trains respectively of different ratio.

6. A rotary transmission according to Claim 5, characterised thereby that said common drive gear wheel (22) is engagable with each of the countershafts (14,15) respectively through gear trains of the same ratio.

FIG. 1.

FIG. 2.

0046373

FIG. 3.

16

36

32    25

14

21

22

17

33

15

23

24

23

37

A

A

FIG. 4.

21

23

37

14

15

36

3/3

0046373

European Patent Office

**EUROPEAN SEARCH REPORT**

0046373

Application number

EP 81303686.0

## DOCUMENTS CONSIDERED TO BE RELEVANT

| Category | Citation of document with indication, where appropriate, of relevant passages | Relevant to claim |
|---|---|---|
| X | PATENT ABSTRACTS OF JAPAN, un-examined applications, section M, vol. 1, no. 83, July 30, 1977 THE PATENT OFFICE JAPANESE GOVERNMENT page 2004 M 77 * Kokai no. 52-29028 (KAMIZAKI) fig., bevel gears 8a, 9a * | 1,4-6 |
| | -- | |
| A | GB - A - 1 426 718 (TURNER MANUFACTURING COMPANY LIMITED) | |
| | -- | |
| A | GB - A - 1 434 928 (ERIC ALEXANDER PENGILLY) | |
| | -- | |
| A | US - A - 4 152 949 (VANDERVOORT et al.) | |
| | ---- | |

**CLASSIFICATION OF THE APPLICATION (Int. Cl.³)**

B 60 K 17/06

F 16 H 3/08

**TECHNICAL FIELDS SEARCHED (Int. Cl.³)**

B 60 K 17/00

F 16 H

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims |
|---|---|

| Place of search | Date of completion of the search | Examiner |
|---|---|---|
| VIENNA | 17-11-1981 | DENK |

EPO Form 1503.1 06.78